# EUROPÄISCHE PATENTSCHRIFT

(11) **EP 0 600 186 B1**
(45) Veröffentlichungstag und Bekanntmachung des Hinweises auf die Patenterteilung: **28.02.1996**
(21) Anmeldenummer: 93116120.2
(22) Anmeldetag: 06.10.1993
(51) Int. Cl.: F16D 65/16

(54) **Schutzkappe für den Bremszylinder einer Scheibenbremse**
Protection-cap for the brake-cylinder of a disc-brake
Capuchon pour un piston à frein de frein à disque

(30) Priorität: 28.11.1992 DE 4240061
(43) Veröffentlichungstag der Anmeldung: 08.06.1994
(73) Patentinhaber: ITT Automotive Europe GmbH, D-60488 Frankfurt am Main (DE)
(72) Erfinder: Rückert, Helmut, D-64354 Reinheim (DE); Teitge, Hilmar, D-60325 Frankfurt am Main (DE)

(56) Entgegenhaltungen:
- EP-A- 0 366 505
- DE-A- 2 919 536
- DE-A- 3 833 766
- DE-A- 4 127 830
- DE-A- 4 209 646

## Beschreibung

Die Erfindung betrifft eine Schutzkappe für den Bremszylinder einer Scheibenbremse gemäß dem Oberbegriff des Patentanspruchs 1.

Eine gattungsgemäße Schutzkappe ist aus der EP-A 0366505 bekannt. Bei dieser bekannten Schutzkappe ist eine Versteifungseinlage vollständig in das elastomere Material eines Faltenbalgs eingebettet und durch Vulkanisieren mit dem elastomeren Material verbunden. Dies bedingt ein vergleichsweise teures Herstellungsverfahren und erschwert eine automatische Montage der Schutzkappe, da das Montagewerkzeug nicht unmittelbar an der Versteifungseinlage abgestützt werden kann.

In der Hauptanmeldung P 41 27 830.5 wurde deshalb vorgeschlagen, einen Versteifungsring mit Perforationen zu versehen, die von dem elastomeren Material des Faltenbalgs durchdrungen sind und einen aus der Tasche hervorstehenden radialen Kragen an den Versteifungsring anzuformen, der eine Anlagefläche für ein Montagewerkzeug bildet. Es hat sich jedoch herausgestellt, daß ein derart ausgestalteter Versteifungsring aufgrund der im montierten Zustand auftretenden Spannungen zu Verformungen neigt, die unter bestimmten Umständen ein Lösen der Klemmverbindung des Faltenbalgs am Bremszylinder bewirken können.

Der Erfindung liegt die Aufgabe zugrunde, eine Schutzkappe der eingangs genannten Art zu schaffen, die sich für eine automatische Montage eignet und hinsichtlich ihrer Befestigung am Bremszylinder verbessert ist.

Zwei alternative Lösungen ergeben sich entweder aus den kennzeichnenden Merkmalen des Anspruchs 1 oder 7.

Die Lösung gemäß Anspruch 1 nutzt die beim montierten Versteifungsring auftretenden Spannungen und Verformungen dazu aus, den Halt des Faltenbalgs am Bremszylinder und die Dichtwirkung zu verbessern, indem der unter radialer Vorspannung stehende Versteifungsring sich in axialer Richtung verbiegt und dabei das Ende des Faltenbalgs axial an den Bremszylinder fest andrückt. Die Ausnehmungen des Versteifungsrings gemäß Anspruch 2 erleichtern die erfindungsgemäße Verformung. Geeignete Materialien für den Versteifungsring ergeben sich aus den Ansprüchen 3 und 4. In einer bevorzugten Ausführungsform der Erfindung gemäß Anspruch 5 wird die Dichtwirkung noch durch eine zusätzliche Dichtlippe oder einen Dichtwulst des Faltenbalgs verbessert. Um sicherzustellen, daß sich der Versteifungsring axial in Richtung auf den Bremszylinder zu verformt wird eine Ausgestaltung gemäß Anspruch 6 empfohlen.

Eine alternative Lösung der gestellten Aufgabe ergibt sich aus den Ansprüchen 7 bis 10. Bei der Ausführungsform gemäß Anspruch 7 wird eine unerwünschte Verformung des Versteifungsrings durch Ausnehmungen vermieden, die über den Umfang verteilt sind. Durch diese gezielte Schwächung des Versteifungsrings an mehreren Stellen wird er elastischer und eine ansonsten drohende Schrägverformung wird verhindert. Die erfindungsgemäßen Ausnehmungen sind gleichzeitig zum Eingriff des Montagewerkzeugs bei der automatischen Montage vorgesehen und werden auch zur Zentrierung der Schutzkappe verwendet. Vorteilhafte Ausgestaltungsformen der zweiten Lösung ergeben sich aus den Ansprüchen 8 bis 10.

Ausführungsbeispiele der Erfindung werden nachfolgend anhand der Zeichnungen näher erläutert.

Es zeigen:
- Figur 1: eine geschnittene Teilansicht einer am Bremszylinder montierten Schutzkappe in einer ersten Ausführungsform,
- Figur 2: dieselbe Schutzkappe während der Montage,
- Figur 3: eine Seitenansicht einer Schutzkappe in einer zweiten Ausführungsform,
- Figur 4: einen Versteifungsring der Schutzkappe von Figur 3,
- Figur 5: eine geschnittene Teilansicht derselben Schutzkappe im montierten Zustand.

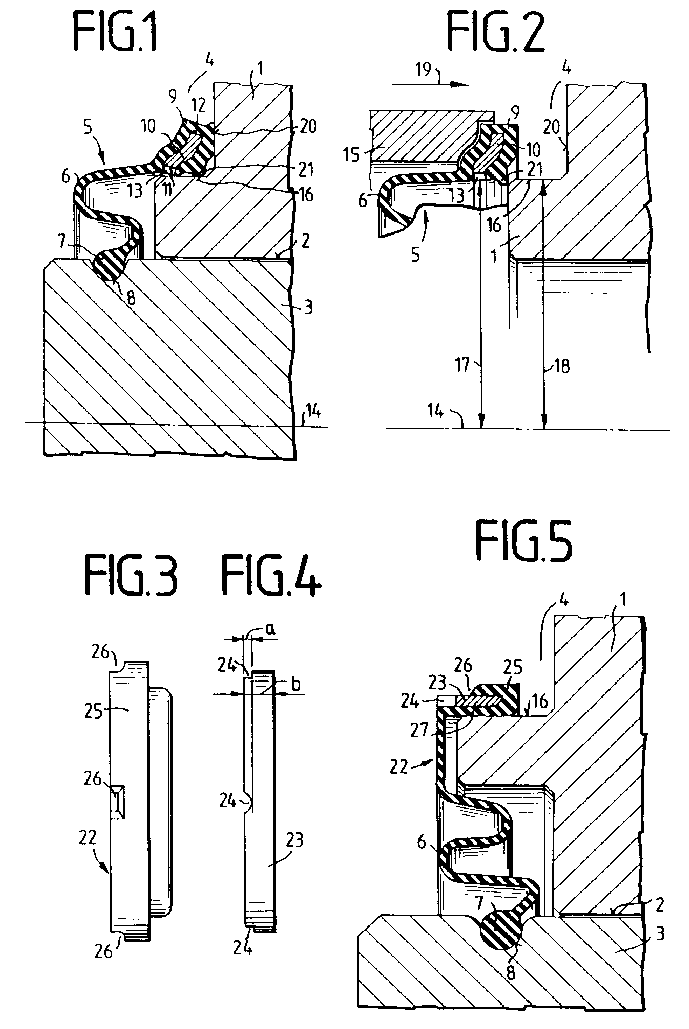

In Figur 1 ist das offene Ende eines Bremszylinders 1 einer Scheibenbremse mit einem aus der Zylinderbohrung 2 herausragenden Bremskolben 3 im Schnitt teilweise dargestellt. Im Bremszylinder 1 ist eine ringförmige Ausnehmung 4 vorgesehen, in der eine Schutzkappe 5 angeordnet ist. Die Schutzkappe 5 besteht aus einem den Bremskolben 3 ringförmig umgebenden, mehrfach gefalteten Faltenbalg 6, der an seinem radial inneren Ende mit einem Befestigungswulst 7 in eine Ringnut 8 des Bremskolbens 3 eingeknöpft ist. Das radial äußere Ende 9 der Schutzkappe 5 ist durch einen Versteifungsring 10 aus rostfreiem Stahlblech versteift, der in einer radial nach innen offenen Tasche des radial äußeren Endes 9 angeordnet ist.

Der Versteifungsring 10 besitzt einen radial inneren Rand 11 und einen radial äußeren Rand 12, der gegenüber dem inneren Rand 11 axial in Richtung Bremszylinder 1 versetzt ist, so daß der Versteifungsring 10 im Querschnitt wellenförmig bzw. in der Tendenz S-förmig ist. Der radial innere Rand 11 ist mit Ausnehmungen 13 versehen, die in Umfangsrichtung in gleichmäßigem Abstand zueinander angeordnet sind. Die gemeinsame Achse 14 von Bremszylinder 1, Bremskolben 3 und Schutzkappe 5 ist durch Strichelung angedeutet.

In Figur 2 erkennt man die Schutzkappe 5 während der automatischen Montage durch ein Montagewerkzeug 15 kurz vor dem Aufschieben des radial äußeren Endes 9 auf eine zylindrische Wandfläche 16 der Ausnehmung 4. Der radial innere Rand 11 weist dabei noch einen kleineren Innendurchmesser 17 auf als der Außendurchmesser 18 der zylindrischen Wandfläche 16. Während der Montage wird nun das radial äußere Ende 9 mittels des Montagewerkzeugs 15 in axialer Pfeilrichtung 19 gedrückt, wobei sich der Versteifungsring 10 beim Aufschieben seines radial inneren Randes 11 auf die Wandfläche 16 radial aufdehnt und der radial äußere Rand 12 aufgrund der radialen Spannung in axialer Pfeilrichtung 19 verbogen wird. Wie man nun wieder in Figur 1 erkennt, liegt nach erfolgter Montage das radial äußere Ende 9 an einer Wand 20 des Bremszylinders 1 unter axialer Vorspannung an, wobei das elastische Material der Schutzkappe 5 verformt wird. Dadurch wird eine besonders gute Dichtwirkung zwischen dem radial äußeren Ende 9 der Schutzkappe 5 und dem Bremszylinder 1 erzielt.

Eine Verbesserung der Dichtwirkung in radialer Richtung wird durch eine umlaufende Dichtlippe 21 erreicht, die an der Schutzkappe 5 in unmittelbarer Nähe des radial inneren Randes 11 des Versteifungsrings 10 ausgebildet ist, radial nach innen vorsteht und die zylindrische Wandfläche 16 des Bremszylinders 1 angedrückt ist.

Eine alternative Ausführungsform ist in den Figuren 3 bis 5 dargestellt. Figur 3 zeigt die alternative Schutzkappe 22 als solche vor der Montage in einer Seitenansicht. In Figur 4 ist der alternative Versteifungsring 23 allein dargestellt. Der Versteifungsring 23 ist im wesentlichen zylindrisch geformt und besitzt auf der dem Bremszylinder 1 abgewandten Axialseite vier Ausnehmungen 24, die in Umfangsrichtung im gleichmäßigen Abstand zueinander angeordnet sind. Die axiale Abmessung a der Ausnehmungen 24 beträgt etwa 1/3 der axialen Breite b des Versteifungsrings 23. Der Versteifungsring 23 besteht wiederum aus rostfreiem Stahl.

In Figur 5 ist das alternative Ausführungsbeispiel der Erfindung entsprechend Figur 1 detaillierter dargestellt. Hinsichtlich der Anordnung von Bremszylinder 1, Zylinderbohrung 2, Bremskolben 3, Ausnehmung 4, Faltenbalg 6, Befestigungswulst 7, Ringnut 8 und Wandfläche 16 wird auf die Beschreibung der Figur 1 verwiesen.

Der Versteifungsring 23 ist in einem modifizierten radial äußere Ende 25 der Schutzkappe 22 ebenfalls in einer Tasche angeordnet, die aber zu der dem Bremszylinder 1 abgewandten Axialseite hin offen ist. Das elastische Material des radial äußeren Endes 25 ist mit vier Ausnehmungen 26 versehen, die den Ausnehmungen 24 des Versteifungsrings 23 entsprechen und genauso angeordnet sind. Die Ausnehmungen 26 erlauben den Zugriff eines nicht gezeigten Montagewerkzeugs auf den Versteifungsring 23, in dessen Ausnehmungen 24 das Montagewerkzeug eingreift, um den Versteifungsring 23 und damit das äußere Ende 25 der Schutzkappe 22 auf die zylindrische Wandfläche 16 der Ausnehmung 4 aufzuschieben und so die Schutzkappe 22 am Bremszylinder 1 zu befestigen. Durch Eingriff des Montagewerkzeugs in die Ausnehmungen 24 wird die Schutzkappe 22 in ihrer korrekten Lage zentriert. Während der Montage wird ein ringförmiger Bereich 27 des radial äußeren Endes 25 zwischen dem Versteifungsring 23 und der Wandfläche 16 unter radialer Spannung eingeklemmt. Aufgrund dieser Vorspannung wird auch der Versteifungsring 23 minimal aufgeweitet. Dabei verhindern die Ausnehmungen 24 durch eine gezielte Schwächung des Versteifungsringes in dem Bereich, der axial über die zylindrische Wandfläche 16 hinausragt, daß sich der Versteifungsring 23 insgesamt schräg verformt. Eine solche Schrägverformung würde nämlich ein Heruntergleiten des radial äußeren Endes 25 von der Wandfläche 16 begünstigen. Damit tragen also die Ausnehmungen 24 auch zu einem verbesserten Sitz der Schutzkappe 22 am Bremszylinder 1 bei.

## Patentansprüche

1. Schutzkappe (5) für den Bremszylinder (1) einer Scheibenbremse, mit einem ringförmigen Faltenbalg (6), einem in eine Ringnut (8) im Bremskolben (3) des Bremszylinders (1) eingreifenden Befestigungswulst (7) an einem ersten Ende des Faltenbalgs (6) und einem das zweite Ende (9) des Faltenbalgs (6) gegen die zylindrische Wandfläche (16) einer ringförmigen Ausnehmung (4) im Bremszylinder (1) andrückenden Versteifungsringes (10), der zumindest teilweise von dem Material des Faltenbalgs (6) umgeben ist, wobei das zweite Ende (9) des Faltenbalgs (6) eine einseitig offene, ringförmige Tasche bildet, in die der Versteifungsring (10) eingelegt ist, wobei der Versteifungsring (10) innnerhalb der Tasche Perforationen aufweist, und wobei ein aus der Tasche hervorstehender Rand (11) des Versteifungsringes (10) eine Anlagefläche aufweist, dadurch **gekennzeichnet**, daß der Rand (11) des Versteifungsrings (10) radial nach innen aus der Tasche hervorsteht und im entspannten Zustand einen kleineren Innendurchmesser (17) aufweist als der Außendurchmesser (18) der zylindrischen Wandfläche (16) der Ausnehmung (4) des Bremszylinders (1), so daß der am Bremszylinder (1) montierte Versteifungsring (10) unter radialer Spannung steht, aufgrund derer sein radial äußerer Rand (12) in axialer Richtung (19) verbogen ist und das radial äußere Ende (9) der Schutzkappe (5) axial an eine Wand (20) des Bremszylinders (1) andrückt.

2. Schutzkappe nach Anspruch 1, dadurch **gekennzeichnet**, daß der radial innere Rand (11) des Versteifungsrings (10) Ausnehmungen (13) aufweist, die in Umfangsrichtung im Abstand zueinander angeordnet sind.

3. Schutzkappe nach einem der Ansprüche 1 oder 2, dadurch **gekennzeichnet**, daß der Versteifungsring (10) aus rostfreiem Stahl besteht.

4. Schutzkappe nach einem der Ansprüche 1 bis 3, dadurch **gekennzeichnet**, daß der Versteifungsring (10) aus einem thermoplastischen Kunststoff besteht.

5. Schutzkappe nach einem der vorhergehenden Ansprüche, dadurch **gekennzeichnet**, daß das an der zylindrischen Wandfläche (16) der Ausnehmung (4) des Bremszylinders (1) anliegende Ende (9) der Schutzkappe (5) einen Dichtwulst oder eine Dichtlippe (21) aufweist.

6. Schutzkappe nach einem der vorhergehenden Ansprüche, dadurch **gekennzeichnet**, daß der radial äußere Rand (12) des Versteifungsrings (10) gegenüber dem radial inneren Rand (11) axial in Richtung Bremszylinder (1) versetzt ist.

7. Schutzkappe (22) für den Bremszylinder (1) einer Scheibenbremse mit einem ringförmigen Faltenbalg (6), einem in eine Ringnut (8) im Bremskolben (3) des Bremszylinders (1) eingreifenden Befestigungswulst (7) an einem ersten Ende des Faltenbalgs (6) und ei-nem das zweite Ende (25) des Faltenbalgs (6) gegen die zylindrische Wandfläche (16) einer ringförmigen Ausnehmung (4) im Bremszylinder (1) andrückenden Versteifungsringes (23), der zumindest teilweise von dem Material des Faltenbalgs (6) umgeben ist, wobei das zweite Ende (25) des Faltenbalgs (6) eine einseitig offene, ringförmige Tasche bildet, in die der Versteifungsring (23) eingelegt ist, wobei der Versteifungsring (23) innerhalb der Tasche Perforationen aufweist, und wobei ein aus der Tasche hervorstehender Rand des Versteifungsrings (23) eine Anlagefläche aufweist, dadurch **gekennzeichnet**, daß die Tasche auf der dem Bremszylinder (1) abgewandten Axialseite offen ist und der Versteifungsring (23) auf dieser Axialseite mit Ausnehmungen (24) versehen ist, die in Umfangsrichtung im Abstand zueinander angeordnet sind.

8. Schutzkappe nach Anspruch 7, dadurch **gekennzeichnet**, daß die axiale Abmesssung a der Ausnehmungen (24) im wesentlichen 1/3 der axialen Breite b des Versteifungsrings (23) beträgt.

9. Schutzkappe nach Anspruch 7 oder 8, dadurch **gekennzeichnet**, daß vier Ausnehmungen (24) gleichmäßig über den Umfang des Versteifungsrings (23) verteilt sind.

10. Schutzkappe nach einem der Ansprüche 7 bis 9, dadurch **gekennzeichnet**, daß der Versteifungsring (23) aus Stahl oder Aluminium oder Kunststoff besteht.

## Claims

1. A dust cover (5) for the brake cylinder (1) of a disc brake, including an annular pleated bellows (6), a fixing torus (7) at a first end of the pleated bellows (6) which engages into an annular groove (8) in the brake piston (3) of the brake cylinder (1), and a reinforcing ring (10) which is at least partly surrounded by the material of the pleated bellows (6) and urges a second end (9) of the pleated bellows (6) against the cylindrical wall surface (16) of an annular recess (4) in the brake cylinder (1), with the second end (9) of the pleated bellows (6) forming a unilaterally open, annular bag for accepting the reinforcing ring (10), with the reinforcing ring (10) having perforations within the bag, and with an edge (11) of the reinforcing ring (10) which projects from the bag including an abutment surface,
characterized in that the edge (11) of the reinforcing ring (10) projects radially inwardly from the bag and, in the untensioned condition, its internal diameter (17) is smaller than the external diameter (18) of the cylindrical wall surface (16) of the recess (4) in the brake cylinder (1) so that the reinforcing ring (10) mounted on the brake cylinder (1) is subjected to radial tension, due to which tension its radially external edge (12) is deformed in an axial direction (19) and urges the radially external end (9) of the dust cover (5) in an axial direction against a wall (20) of the brake cylinder (1).

2. A dust cover as claimed in claim 1,
characterized in that the radially internal edge (11) of the reinforcing ring (10) includes recesses (13) which are spaced from each other in the circumferential direction.

3. A dust cover as claimed in claim 1 or claim 2,
characterized in that the reinforcing ring (10) is made of stainless steel.

4. A dust cover as claimed in any one of the claims 1 to 3,
characterized in that the reinforcing ring (10) is made of a thermoplastic synthetic resin.

5. A dust cover as claimed in any one of the preceding claims,
characterized in that the end (9) of the dust cover (5) abutting on the cylindrical wall surface (16) of the recess (4) in the brake cylinder (1) includes a sealing bead or a sealing lip (21).

6. A dust cover as claimed in any one of the preceding claims,
characterized in that the radially external edge (12) of the reinforcing ring (10) is offset relative to the radially internal edge (11) in an axial direction towards the brake cylinder (1).

7. A dust cover (22) for the brake cylinder (1) of a disc brake, including an annular pleated bellows (6), a fixing torus (7) at a first end of the pleated bellows (6) which engages into an annular groove (8) in the brake piston (3) of the brake cylinder (1), and a reinforcing ring (23) which is at least partly surrounded by the material of the pleated bellows (6) and urges a second end (25) of the pleated bellows (6) against the cylindrical wall surface (16) of an annular recess (4) in the brake cylinder (1), with the second end (25) of the pleated bellows (6) forming a unilaterally open, annular bag for accepting the reinforcing ring (23), with the reinforcing ring (23) having perforations within the bag, and with an edge of the reinforcing ring (23) which projects from the bag including an abutment surface,
characterized in that the bag is open on the axial side remote from the brake cylinder (1), and the reinforcing ring (23) has recesses (24) on this axial side which are spaced from one another in the circumferential direction.

8. A dust cover as claimed in claim 7,
characterized in that the axial dimension 'a' of the recesses (24) is substantially one third of the axial width 'b' of the reinforcing ring (23).

9. A dust cover as claimed in claim 7 or claim 8,
characterized in that four recesses (24) are evenly distributed over the periphery of the reinforcing ring (23).

10. A dust cover as claimed in any one of the claims 7 to 9,
characterized in that the reinforcing ring (23) is made of steel or aluminum or plastic.

## Revendications

1. Capuchon de protection (5) pour le cylindre de frein (1) d'un frein à disque, comprenant un soufflet annulaire (6), un bourrelet de fixation (7) s'engageant dans une gorge annulaire (8) ménagée dans le piston de frein (3), le bourrelet étant agencé à une extrémité du soufflet (6), et une bague de renfort (10) serrant la deuxième extrémité (9) du soufflet (6) contre la surface de paroi cylindrique (16) d'un évidement annulaire (4) du cylindre de frein (1), la bague étant au moins partiellement entourée par la matière du soufflet (6), la deuxième extrémité (9) du soufflet (6) formant une poche annulaire ouverte d'un côté, dans laquelle est insérée la bague de renfort (10), la bague de renfort (10) présentant des perforations à l'intérieur de la poche, et un bord (11) de la bague de renfort (10), qui se projette hors de la poche, comportant une surface d'appui,
caractérisé en ce que le bord (11) de la bague de renfort (10) fait saillie radialement vers l'intérieur, au-delà de la poche, et présente un diamètre intérieur (17) qui, à l'état libre, est plus petit que le diamètre extérieur (18) de la surface de paroi cylindrique (16) de l'évidement (4) du cylindre de frein (1), de manière que la bague de renfort (10) montée sur le cylindre de frein (1) subisse une précontrainte radiale ayant pour effet de déformer le bord radialement extérieur (12) de la bague dans un sens axial (19) et de forcer l'extrémité radialement extérieure (9) du capuchon de protection (5) axialement contre la paroi (20) du cylindre de frein (1).

2. Capuchon de protection selon la revendication 1, caractérisé en ce que le bord radialement intérieur (11) de la bague de renfort (10) comporte des évidements (13), qui sont espacés les uns par rapport aux autres dans le sens de la circonférence.

3. Capuchon de protection selon l'une des revendications 1 ou 2, caractérisé en ce que la bague de renfort (10) est réalisée en acier inoxydable.

4. Capuchon de protection selon l'une des revendications 1 à 3, caractérisé en ce que la bague de renfort (10) est réalisée en une matière synthétique thermoplastique.

5. Capuchon de protection selon l'une des revendications précédentes, caractérisé en ce que l'extrémité (9) du capuchon de protection, qui s'appuie sur la surface de paroi cylindrique (16) de l'évidement (4) du cylindre de frein (1) comporte un bourrelet d'étanchéité ou une lèvre d'étanchéité (21).

6. Capuchon de protection selon l'une des revendications précédentes, caractérisé en ce que le bord radialement extérieur (12) de la bague de renfort (10) est décalé axialement en direction du cylindre de frein (1) par rapport au bord radialement intérieur (11).

7. Capuchon de protection (22) pour le cylindre de frein (1) d'un frein à disque comportant un soufflet annulaire (6), un bourrelet de fixation (7) s'engageant dans une gorge annulaire (8) ménagée dans le piston de frein (3), le bourrelet étant agencé à une extrémité du soufflet (6), et une bague de renfort (23) serrant la deuxième extrémité (25) du soufflet (6) contre la surface de paroi cylindrique (16) d'un évidement annulaire (4) du cylindre de frein (1), la bague étant au moins partiellement entourée par la matière du soufflet (6), la deuxième extrémité (25) du soufflet (6) formant une poche annulaire ouverte d'un côté, dans laquelle est insérée la bague de renfort (23), la bague de renfort (23) présentant des perforations à l'intérieur de la poche, et un bord (11) de la bague de renfort (23), qui se projette hors de la poche, comportant une surface d'appui, caractérisé en ce que la poche est ouverte du côté axial qui est éloigné du cylindre de frein (1), et en ce que la bague de renfort (23) est pourvue, de ce côté axial, d'évidements (24) espacés les uns des autres dans le sens de la circonférence.

8. Capuchon de protection selon la revendication 7, caractérisé en ce que la dimension axiale "*a*" des évidements (24) représente sensiblement ¹/₃ de la largeur axiale "*b*" de la bague de renfort (23).

9. Capuchon de protection selon la revendication 7 ou 8, caractérisé en ce que quatre évidements (24) sont répartis de façon équidistante sur la circonférence de la bague de renfort (23).

10. Capuchon de protection selon l'une des revendications 7 à 9, caractérisé en ce que la bague de renfort (23) est réalisée en acier ou en aluminium ou en une matière plastique.
